# EUROPEAN PATENT APPLICATION

(11) **EP 3 742 158 A1**
(43) Date of publication of application: **25.11.2020**
(21) Application number: 19175521.4
(22) Date of filing: 21.05.2019
(51) Int. Cl.: G01N 27/30, G01N 27/416, G01N 27/403

(54) **REFERENCE ELECTRODE FOR A PH-SENSOR AND PH-SENSOR**

(71) Applicant: ABB Schweiz AG, 5400 Baden (CH)
(72) Inventor: Di-Gianni, Anna, 5405 Dättwil (CH); Rodriguez-Vilches, Seila, 8800 Thalwil (CH)
(74) Representative: Maiwald Patent- und Rechtsanwaltsgesellschaft mbH

(57) **Abstract**

A reference electrode system (10) for a pH-sensor system, the reference electrode system comprising:
a junction (30) comprising a polymerized ionic liquid,
a reference electrode layer (40) comprising an electrolytic solution, and
a reference electrode (45), which is at least partly arranged in the reference electrode layer (40).

## Description

### Field of the invention

The invention relates to a reference electrode system for a pH-sensor for measuring a pH-value of a medium, such as e.g. a fluid, a solution, a dispersion or the like. The invention further relates to a pH-sensor system comprising such reference electrode system and to a method for manufacturing a pH-sensor system.

### Background of the invention

Generally, pH-sensors are widely used for determining and/or measuring a pH value of a medium, such as e.g. a fluid. To ensure durability, a long operational time and/or a long lifetime of a pH-sensor, it may be desirable to reduce an amount of ions of the medium that penetrate through at least a part of the sensor to a reference electrode of the sensor. Such ions penetrating to the reference electrode are also referred to as poisoning ions, such as bromide, iodide or sulphite. On the other hand, a reliable connection between the medium to be measured and a reference electrode should be provided.

In conventional pH-sensors, the measuring electrode is usually a glass electrode while the reference electrode can be e.g. an Ag/AgCl based one. There are several possibilities known to design and produce a pH sensor. One possibility, which is not meant to be limiting others, comprises that during production of the pH sensor, the measuring electrode can be placed inside one or more wood sections, e.g. a sequence of 3 to 4 wood sections, connected with each other and separated by so-called washers, which can be made of e.g. viton material. Further, the wood usually is impregnated with a saturated KCl solution and the Ag/AgCl wire is inserted inside the wood. Having several wood sections with washers in between has the same aim of a multiple junction, which provides a more torturous path to the poisoning ions and species before they reach the KCl solution that is in contact with the Ag/AgCl wire.

Although conventional pH sensors have good properties, such as a low plugging, a great multitude of successive semipermeable membranes and channels, effective sealing against the housing and the pH stem glass by swelling upon water uptake, and prohibition of crystallization from the saturated KCl fill solution, those sensors also have a variety of drawbacks. Particularly, the use of wood or wood junction(s) may cause a high manufacturing time, because the wood sections are usually singularly inserted by hand on top of the glass tube of the measuring electrode. Further, use of wood may cause considerable scrap, as non-suitable defected wood sections have to be discarded. Moreover, during the manual operation of placing the wood sections around the glass electrode, the glass may break. In turn, this may constitute a health and safety issue, because glass breaking during the manufacturing process can cause cuts to the workers. Apart from that, only one type of wood is currently used for the manufacturing of the wood junction(s), which infers a limitation in sourcing and can lead to further increased manufacturing costs.

### Summary of the invention

It may, therefore, be desirable to provide for an improved reference electrode system for an improved pH-sensor system as well as an improved pH-sensor system, at least partly overcoming one or more of the drawbacks described hereinabove.

The invention is defined in the independent claims, wherein further embodiments are incorporated in the dependent claims and the following description. It should be noted that any feature and/or element described in the following with reference to one aspect of the invention equally applies to any other aspect of the invention. Specifically, any feature and/or element described in the following with respect to the reference electrode system equally applies to the pH sensor system and/or the method for manufacturing the pH sensor system, and vice versa.

One aspect of the invention relates to a reference electrode system for a pH-sensor system for determining a pH value of a medium, such as e.g. a fluid, a solution, a dispersion or the like. The reference electrode system comprises a junction, here also called a diaphragm, comprising or consisting of a polymerized ionic liquid, and a reference electrode layer comprising an electrolytic solution, such as e.g. a KCl solution. The reference electrode system further comprises a reference electrode, which is at least partly arranged in the reference electrode layer. Therein, the reference electrode may at least partly extend through a part of the reference electrode layer.

A further aspect of the invention relates to a reference electrode system for a pH-sensor system for determining a pH value of a medium, such as e.g. a fluid, a solution, a dispersion or the like, wherein the reference electrode system comprises a junction, here also called a diaphragm, and a reference electrode layer comprising or consisting of a mixture of a lignocellulosic fibrous material and inert filler, for example inert platelets, wherein the mixture is at least partly impregnated with an electrolytic solution, such as e.g. a KCl solution. The reference electrode system further comprises a reference electrode, which is at least partly arranged in the reference electrode layer. Therein, the reference electrode may at least partly extend through a part of the reference electrode layer

The junction or diaphragm of the reference electrode system may refer to a layer and/or membrane comprising or consisting of polymerized ionic liquid. Generally, the junction or diaphragm provides an electric connection between the fluid to be measured and the reference electrode layer. Polymerized ionic liquids are polymeric organic salts which are liquid at temperatures below 100°C. The ionic moiety, preferably the cationic moiety, of the polymerized ionic liquid is preferably situated in the side substituents of the polymeric chain. Preferably, the monomers of the polymerized ionic liquid are selected from mono- and/or bifunctional imidazolium derivatives, such as mono- and/or bifunctional vinyl imidazolium derivatives. The anionic counterions are preferably selected from sulphonylimide cations. In other words, the polymerized ionic liquid may be constituted of monomers selected from mono- and/or bifunctional vinyl imidazolium salts with sulfonylimide counterions, more preferably a mixture of mono and bifunctional vinyl imidazolium salts with sulfonylimide counterions. Accordingly, the PIL and/or the diaphragm may comprise e.g. a mixture of monomers and crosslinkers.

Further preferably, other formulation components could be applied, such as functionalized polyethylene glycol, such as diacrylated PEG or vinyl ether PEG (both with different molecular weights). These polymers may be used as crosslinkers in alternative to the difunctional ionic liquid descripted above. Also instead of PEG, one might as well use functionalized polysiloxanes, such as polydimethylsiloxane (PDMS) vinyl terminated, PDMS bis acrylate or PDMS ether bis acrylate. Further preferably one could use a formulation with Bisphenol-A-ethoxylate-dimethylacrylate as crosslinker.

Further, the junction or diaphragm and/or the PIL of the diaphragm may comprise an initiator, such as e.g. a photoinitiator, an ultraviolet initiator and/or a thermal initiator. Therein, the initiator may serve to induce polymerization of other components of the diaphragm, such as the monomers and/or crosslinkers.

By way of example, the diaphragm and/or the PIL of the diaphragm may comprise mono- and/or bifunctional vinyl imidazolium bis-sulfonylimide salts and the initiator (e.g. a UV and/or thermal initiator). These salts belong to the family of the so-called ionic liquids (IL) and may provide advantageous properties, such as for example limited water solubility, and little affinity towards hydrophilic ions. Using these salts as junctions in reference electrodes may provide a number of benefits, including the reduction of clogging of a junction plug of the system, reducing the necessity of renewing the electrolytic solution, reducing a contamination of the sample solution with the electrolyte, and providing a stable and reproducible liquid junction potential. It will also retard the poisoning ions entering into the pulp resp. flakes.

Furthermore, the material and/or the salts of the diaphragm as described above may provide presence of easily polymerizable functionalities what leads to the polymerization of the PIL and/or of material of the junction or diaphragm. The monomers functionality is what allows the polymerization to take place and obtain the PIL or material of the junction or diaphragm.

Suitably, the polymerization of the monomers of the ionic liquid is initiated in the presence of a thermal initiator and/or photoinitiator, preferably in the presence of a photoinitiator. Preferably, the photoinitiator is selected from 2-hydroxy-2-methylpropiophenone. This may allow for solidifying the IL and/or the other components such as the crosslinker into a PIL via thermal and/or UV induced polymerization and may result in a material which is easier to handle and allows for an easier design of the reference electrode system in comparison to e.g. a liquid. Furthermore, direct polymerization of the IL, in contrast to incorporation of it into a polymeric matrix, may avoid the possibility for the IL of gradually leaching-out over the lifetime. However, alternatively or additionally, the IL may be copolymerized with another monomer to avoid and/or reduce the leaching-out.

Moreover, gelling of material of the diaphragm has the effect of reducing the ionic conductivity of ILs, since it introduces a higher rigidity therein. However, if, instead of diluting the IL with a non-ionic monomer, the final polymer network is created with all IL monomers, the number of charge carriers is at least kept very high. This may limit the effect of gelling towards the ionic conductivity of the PIL layer, the PIL of the junction or diaphragm and/or the junction or diaphragm. Additionally, in order to keep the flexibility of the final polymer as high as possible, the starting monomers may be and/or may comprise relatively long flexible chains between the reactive moieties.

According to the further aspect of the invention, the reference electrode layer comprises or consists of a mixture of lignocellulosic fibrous material and inert filler, for example inert platelets, which mixture is at least partly impregnated with the electrolytic solution, e.g. a KCl solution. Generally, the inert platelets may refer to flakes, fillers, filler elements, particles and/or bodies comprising or consisting of chemically inert material. By way of example, the inert platelets may comprise glass material, plastic material, viton material and/or carbon material. Specifically, the inert platelets may comprise glass flakes.

By way of example, the lignocellulosic fibrous material may be wood pulp. The wood pulp can be obtained from wood by using mechanical, semi-chemical or fully chemical methods, which break down the bulk structure of wood into single and/or separated wood fibres. The fibres constituting the wood pulp are the same that one can find in wood. However, the fact that they are separated from each other in single elements, allows the use of wood pulp for compressing and/or for using the wood pulp as a matrix for the inert platelets, such as glass flakes. In other words, the wood pulp may comprise single and/or separated wood fibres. Preferably, the wood pulp provides and/or forms a matrix, in which the inert platelets may be embedded and/or integrated.

Generally, the inert platelets and/or glass flakes may be micro sized. Hence, they may have the capability to prolong a path for poisoning ions from the medium to the reference electrode. Such prolonged path may also be referred to as tortuous path. By way of example, the proportions between pulp and flake can be in a range of 20/80 or 50/50, but could also be others.

Generally, the matrix and/or mixture of wood pulp and inert platelets (e.g. glass flakes) is at least partly impregnated with an electrolytic solution (e.g. a KCl solution) and therefore acts as a reference electrolyte in the reference electrode layer. The electrolytic solution may be concentrated and/or saturated. By means of the reference electrode layer, contamination of the reference electrode system and/or the reference electrode can be significantly reduced. Consequently, a lifetime of a pH sensor and/or a pH sensor system equipped with the reference electrode system can be increased significantly. In addition, the manufacturing of the reference electrode system can be simplified and production costs can be reduced. Also, precision and response time can be improved.

According to an embodiment, the inert platelets comprise glass flakes. Glass flakes may be particularly advantageous in terms of their chemical inertness and/or robustness. Also, using glass flakes may allow to further reduce production costs of the reference electrode system.

According to an embodiment, the reference electrode is a wire that comprises Ag/AgCl. Such reference electrode may provide for a high precision in determining a pH value and/or for a low response time of a pH sensor system comprising the reference electrode system.

According to an embodiment, the electrolytic solution is a KCl solution. Particularly, using a KCl solution with a reference electrode comprising an Ag/AgCl wire may provide for a high precision in determining a pH value and/or for a low response time of a pH sensor system comprising the reference electrode system. Optionally, KCl crystals may be added to the KCl solution.

In one embodiment, the reference electrode system further comprises a porous membrane comprising polytetrafluoroethylene (PTFE), wherein the porous membrane is arranged adjacent to the junction or diaphragm. Alternatively or additionally the porous membrane is at least partly in contact and/or in direct contact with the junction or diaphragm. This further improves the effect of the junction or diaphragm comprising the PIL. Furthermore, it improves the sealing against a housing and/or container of a pH-sensor system.

In one embodiment, the polymerized ionic liquid comprises one or more of 3-ethyl-1-vinylimidazolium bis(trifluoromethansulfonyl)imide (also referred to as monomers), and 1,4 butandiyl-3,3'-[bis-(1 vinyl)-imidazolium] Di-bis(trifluoromethansulfonyl)imide (also referred to as crosslinkers).

Preferably the monomers are polymerized in the presence of a photoinitiator. The photoinitiator is preferably 2-hydroxy-2-methylpropiophenone. Suitably, the photoinitiator is added to the monomers in an amount of from 1 to 3 wt%, preferably 2 wt%.

In the following, the chemical structures of the components and/or the materials of the junction or diaphragm are illustrated:

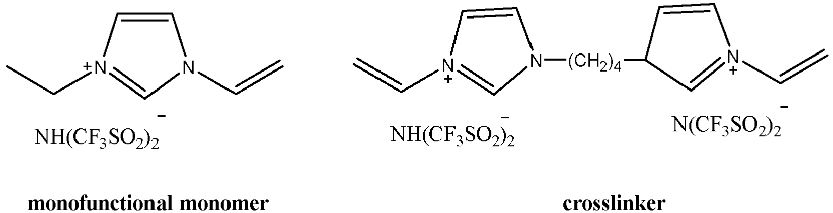

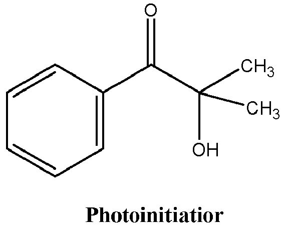

A further aspect of the invention relates to a pH-sensor system and/or a pH-sensor. The pH-sensor system comprises a reference electrode system as describes above and in the following, and a measuring electrode, which is arranged adjacent to and/or integrated in the reference electrode system. This allows to provide for an integrated pH sensor system, e.g. a system that does not require two electrodes. The measuring electrode, by way of example, may be a glass electrode and/or may comprise a glass tube.

The pH-sensor system may comprise a container and/or housing. For instance, the container may be substantially cylindrical in shape. However, any other shape is conceivable, such as e.g. a box-like, tube-like, pipe-like and/or rectangular shape. The container may comprise a first end and a second end arranged opposite to the first end along a longitudinal extension direction of the container. The longitudinal extension direction may be substantially parallel to an axis of symmetry of the container. The measuring electrode may be arranged substantially along and/or parallel to the axis of symmetry. Further, the reference electrode system may at least partly surround the measuring electrode. Accordingly, the measuring electrode may be arranged in a center region of the container and the reference electrode system may at least partly be arranged in a boundary region of the container which boundary region at least partly surrounds the center region of the container. On a first end of the container, the junction or diaphragm may be arranged, such that the junction or diaphragm at least partly surrounds the measuring electrode and/or such that the junction or diaphragm at least partly covers an end of the reference electrode layer of the reference electrode system. For instance, the junction or diaphragm may be disk-like formed and have an opening in a center region thereof through which the measuring electrode may extend. Further, a porous membrane may be arranged at the first end of the container. The porous membrane may at least partly, preferably entirely, cover a surface of the junction or diaphragm, which surface is arranged opposite to a surface of the junction or diaphragm that contacts the reference electrode layer. Moreover, an end of the measuring electrode may at least partly protrude through the junction or diaphragm, the porous membrane and/or the first end of the container. Further, the second end of the container may be a closed end and/or may constitute a closed outer surface of the container.

According to an embodiment, the pH-sensor system further comprises a container, wherein at least a part of the measuring electrode and/or at least a part of the reference electrode system of the pH-sensor system is arranged in the container. This may allow for a simplified handling and/or manufacturing of the pH-sensor system. The container may have a substantially cylindrical shape.

In one embodiment, the measuring electrode comprises a chemically resistant pH-glass and/or a glass element, wherein the pH-glass is at least partly arranged on an end of the measuring electrode, preferably such that the pH-glass at least partly covers the end of the measuring electrode. Therein, the end of the measuring electrode may protrude from a container and/or housing of the pH-sensor system. This allows to protect the measuring electrode and/or the reference electrode against the medium and/or fluid that is to be measured by means of the pH sensor system.

A further aspect of the invention relates to a method for manufacturing a pH-sensor system, the method comprises the steps of:
- providing a container, wherein a first end of the container is open and/or comprises an opening;
- arranging a measuring electrode at least partly in the container and connecting the measuring electrode to a first electrically conducting wire;
- arranging a reference electrode at least partly in the container and connecting the reference electrode to a second electrically conducting wire;
- filling, e.g. through the first end, at least a part of the container with a reference electrode layer comprising a mixture of wood pulp and inert platelets, which mixture is at least partly impregnated with an electrolytic solution; and
- arranging, at the first end of the container, a junction or diaphragm comprising a polymerized ionic liquid.

According to an embodiment, the method further comprises the step of arranging, at the first end of the container, a porous membrane comprising polytetrafluoroethylene, preferably such that at least a part of the porous membrane is in contact with the junction or diaphragm. According to an embodiment, the method further comprises the step of fixing an Ag/AgCl wire, as the reference electrode, at a second end of the container opposite to the first end of the container. This brings the advantage to build a long way for poisoning ions to the reference electrode, from the first end, which is arranged opposite to the second end of the container.

A further aspect of the invention relates to a use of a mixture of wood pulp and inert platelets, which mixture is at least partly impregnated with an electrolytic solution, in a reference electrode system of a pH-sensor system and/or in a pH-sensor system.

The above aspects and embodiments will become apparent from and be elucidated with reference to the embodiments described hereinafter.

### Brief description of the drawings

Exemplary embodiments will be described in the following with reference to the following drawings, wherein:
**Fig. 1** depicts a schematic cross-section of a pH-sensor system according to an exemplary embodiment of the invention;
**Fig. 2** depicts schematically a part of a reference electrode system according to an exemplary embodiment of the invention;
**Fig. 3** depicts a flow chart illustrating steps of a method for manufacturing a pH-sensor system according to an exemplary embodiment of the invention, and
**Fig. 4** depicts a schematic cross-section of a pH-sensor system according to a second exemplary embodiment of the invention;

### Detailed description of exemplary embodiments

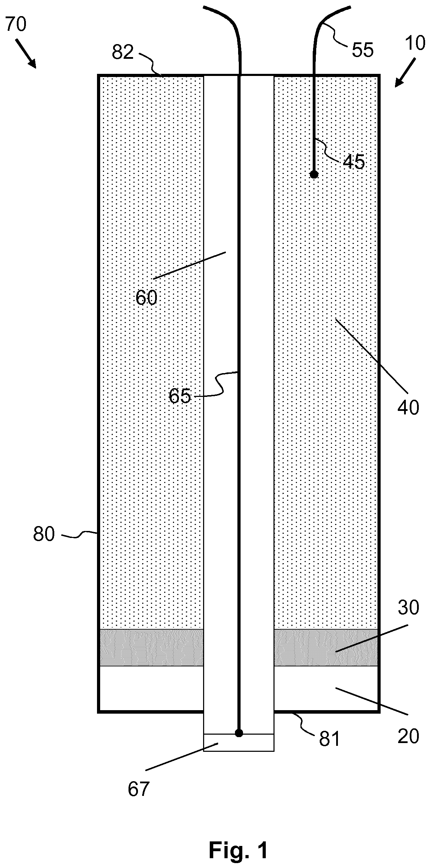

In **Fig. 1**, a cross-section of a pH-sensor system 70 according to an exemplary embodiment of the present invention is schematically shown.

The pH-sensor system 70 comprises a reference electrode system 10 and a measuring electrode 60, which both are at least partly arranged in a cylindrical container 80. The measuring electrode 60 has a cylindrical shape. In some embodiments, the measuring electrode 60 comprises glass and/or is a glass electrode. The container 80 may refer to a housing of the pH-sensor system 70. The container 80 comprises a first end 81 and a second end 82 arranged opposite to the first end 81 along and/or with respect to a longitudinal extension direction of the container 80. The longitudinal extension direction may be substantially parallel to an axis of symmetry of the container 80.

The measuring electrode 60 is fixed to the container 80 at the second end 82 of the container 80 and/or may be arranged substantially in a centre region of the container 80. The measuring electrode 60 may be substantially cylindrically shaped and/or may be arranged along and/or substantially parallel to an axis of symmetry of the container 80.

The measuring electrode 60 comprises a first electrically conducting Ag/AgCl - wire 65 that extends at least partly through the container 80, e.g. along and/or substantially parallel to the axis of symmetry of the container 80. A part of the first wire 65 protrudes from the second end 82 of the container 80. The first wire 65 and/or the part thereof that protrudes from the container 80 may be connected to a measuring device (not shown).

Further, a part of and/or an end of the measuring electrode 60 protrudes from the container 80 and/or from the first end 81 thereof. Further, the measuring electrode 60 comprises a chemically resistant pH-glass 67 and/or a glass element 67 arranged at its end protruding from the first end 81 of the container 80. The pH-glass 67 covers at least a part of the end of the first wire 65 and/or at least a part of the measuring electrode that protrudes from the first end 81 of the container.

The reference electrode system 10 of the pH-sensor system 70 comprises a porous membrane 20 at the first end 81 of the container 80. The porous membrane 20 comprises polytetrafluoroethylene. The membrane 20 improves the sealing against a housing of the pH-sensor system 70 and/or against the container 80. Next to, adjacent to, and/or on top of the membrane 20, a junction or diaphragm 30 is arranged. The junction or diaphragm 30 comprises a polymerized ionic liquid (PIL).

On top of the and/or adjacent to the junction or diaphragm 30, a reference electrode layer 40 of the reference electrode system 10 is arranged. Accordingly, the junction or diaphragm 30 is arranged between the reference electrode layer 40 and the porous membrane 20. The reference electrode layer 40 comprises a mixture of wood pulp and inert platelets, such as e.g. glass flakes. Further, the mixture is at least partly impregnated with an electrolytic solution, such as e.g. a KCl solution. At and/or near the second end 82 of the container 80, an Ag/AgCl wire 45 is arranged, which serves as reference electrode 45. The Ag/AgCl wire 45 is connected to a second electrically conducting wire 55, which, e.g., leads to a measuring device (not shown). The Ag/AgCl wire 45 and/or the reference electrode 45 may extend partly through the reference electrode layer 40 from the second end 82 of the container 80 towards the first end 81. Preferably, the reference electrode 45 may extend through the reference electrode layer 40 substantially parallel to the measuring electrode 60 and/or substantially parallel to the axis of symmetry of the container 80.

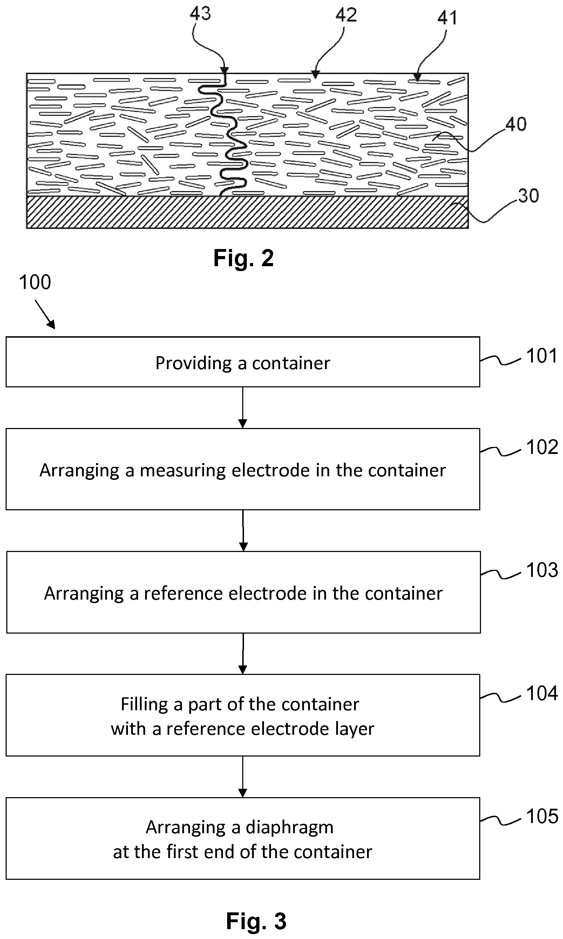

In **Fig. 2****,** a part of a reference electrode system 10 according to an exemplary embodiment of the invention is depicted. If not stated otherwise, the reference electrode system 10 of figure 2 comprises the same elements and/or features as the reference electrode system 10 of figure 1.

As described above with reference to figure 1, the reference electrode layer 40 is arranged above and/or on top of diaphragm 30 and comprises inert platelets 41. The inert platelets 41 can be micro-sized and/or may comprise glass flakes 41. The inert platelets 41 are embedded and/or integrated in a matrix of wood pulp 42. In other words, the wood pulp 42 may comprise separated wood fibers that provide a matrix, in which the inert platelets 41 are arranged. The wood pulp 42 is at least partly impregnated with an electrolyte solution, e.g. a KCl solution.

Furthermore, an exemplary path 43 for poisoning ions is illustrated in figure 2. It is clearly visible that ions pass a prolonged way 43 through the mixture of wood pulp 42 and glass flakes 41. This may increase a lifetime of the reference electrode system 10 and/or the pH sensor system 70, because contamination of the reference electrode system 10 can be significantly reduced. Also, contact of poisonous ions with the electrolytic solution of the reference electrode system 10 that contacts the reference electrode 45 can be avoided.

**Fig. 3** depicts a flow chart 100 illustrating steps of a method for manufacturing a pH-sensor system 70 according to an exemplary embodiment of the present invention. In step 101, a container 80 (see **Fig. 1**) is provided, wherein a first end 81 of the container 80 is open and/or comprises an opening. In step 102, a measuring electrode 60 is arranged at least partly in the container 80. Further, the measuring electrode 60 is connected to a first electrically conducting wire 65.

In step 103, a reference electrode 45 is at least partly arranged in the container 80. The reference electrode 45 may be and/or may comprise an Ag/AgCl wire 45. The reference electrode 45 is connected to a second electrically conducting wire 55. Step 103 may be performed before or after step 102.

In step 104, the container 80 is at least partly filled, e.g. through the first end 81, with a reference electrode layer 40. The reference electrode layer 40 comprises a mixture of wood pulp 42 and inert platelets 41 (see **Fig. 2**), which mixture is at least partly impregnated with an electrolytic solution, such as e.g. a KCl solution. Step 104 may be performed before or after any of steps 102 and 103.

In step 105, a junction or diaphragm 30 comprising a polymerized ionic liquid is arranged at the first end 81 of the container 80, e.g. such that the first end 81 is at least partly covered by the junction or diaphragm 30. Further, a porous membrane 20 may be arranged at the first end 81 of the container 80, e.g. such that the membrane 20 covers at least a part of the junction or diaphragm 30.

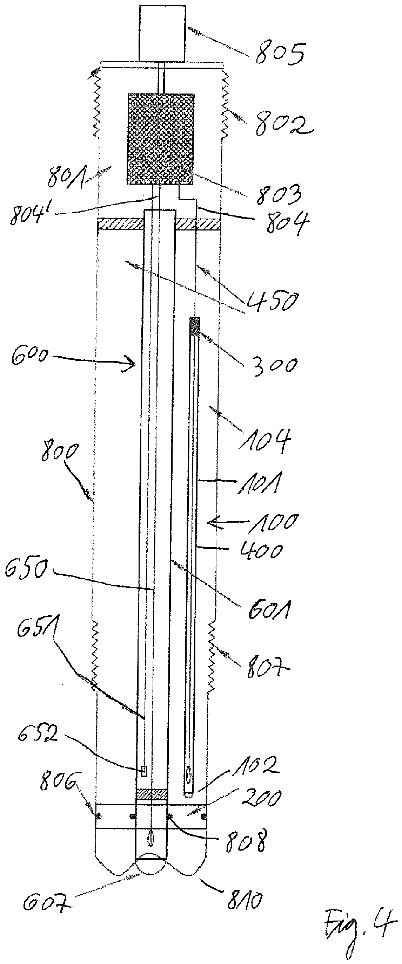

In **Fig. 4**, a cross-section of a pH-sensor system 700 according to a second exemplary embodiment of the present invention is schematically shown.

The pH-sensor system 700 comprises a reference electrode system 100 and a measuring electrode 600, which both are at least partly arranged in a cylindrical container 800. The measuring electrode 600 has a cylindrical shape. The measuring electrode 600 comprises glass 601 and is a glass electrode. The container 800 refers to a housing of the pH-sensor system 700. The container 800 is made of a chemically resistant and robust material, such as PVDF. In an exemplary embodiment, the container body 800 has a diameter of ¾". It comprises a first end 810 and a second end 820 arranged opposite to the first end 810 along and/or with respect to a longitudinal extension direction of the container 800. The longitudinal extension direction may be substantially parallel to an axis of symmetry of the container 800.

The measuring electrode 600 is fixed to the container 800 at the second end 820 of the container 800 and/or may be arranged substantially in a centre region of the container 800. The measuring electrode 600 may be substantially cylindrically shaped and/or may be arranged along and/or substantially parallel to an axis of symmetry of the container 800.

The section at the second end 820 of the container 800 is used as connector/adaptor section 801. In this section the container body is provided with a ¾" thread 802 for mechanically screw-fixing a cable connector (not shown). A printed circuit board (PCB) 803 is disposed within the connector/adaptor section 801 and fixed by means of a potting epoxy material. The PCB is electrically connected through wires 804, 804' with the measuring electrode 600 and the reference electrode system 100 respectively. The PCB may comprise electronic circuitry such as pre-amplifier, signal processor, communication processor, or even micro-processor with data storage and memory means, configured to perform advanced data processing and diagnostic functionality. The PCB is also electrically and signal-wise coupled to a connector 805 which is fixed at the outside of the connector/adaptor section 801. The connector 805 can, as example, be designed as an EZ link (M12), and can be tagged, exemplarily as a VP-tagged only, or as an integral (0.5, 1,3,5, 10 m) - tagged only. On the outside of the lower portion of the container body 800 there is provided another ¾" thread 807 for insertion and screw-fixing of the pH-sensor system 700 to the location of application, such as for example to a flow cell or a liquid tank or a smaller liquid container.

The measuring electrode 600 comprises a first electrically conducting Ag/AgCl - wire 650 that extends at least partly through the container 800, e.g. along and/or substantially parallel to the axis of symmetry of the container 800. The measuring electrode 600 further comprises a second electrically conducting wire 651 which at its end is connected to a PT100 temperature measurement element 652. A part of the first wire 650 and the second wire 651 protrude at the second end 820 of the container 800 and are electrically and signal-wise connected to the PCB 803. Further, the measuring electrode 600 comprises a chemically resistant pH-glass 670 and/or a glass element 670 arranged at its end protruding from the first end 810 of the container 800. The pH-glass 670 covers at least a part of the end of the first wire 650 and/or at least a part of the measuring electrode that protrudes from the first end 810 of the container 800.

The reference electrode system 100 of the pH-sensor system 700 comprises a porous membrane 200 at the first end 810 of the container 800. The porous membrane 200 comprises polytetrafluoroethylene. The membrane 200 improves the sealing against a housing of the pH-sensor system 700 and/or against the container 800. For improving the sealing and for anti-poisoning reasons, the membrane 200 is fixed to the interior side of the container body 800 by means of a Viton O-ring 806. Also the measuring electrode 600 is fixed to the membrane 200 by means of another Viton O-ring 808.

The reference electrode system 100 comprises an elongated tube 101, which is closed at its lower end 102 and open at its upper end 103, wherein the lower end 102 is located close to the first end 810 of the container body 800 and the upper end 103 is located next to the second end 820 of the container body 800.

Next to, adjacent to, and/or on top of the upper end 103 of the tube 101, a junction or diaphragm 300 is arranged. The junction or diaphragm 300 comprises a polymerized ionic liquid (PIL).

Below of the and/or adjacent to the junction or diaphragm 300, a reference electrode layer 400 of the reference electrode system 100 is arranged. Accordingly, the junction or diaphragm 300 is arranged to separate the reference electrode layer 400 from an electrolyte layer 104 and the porous membrane 200. The reference electrode layer 400 is at least partly impregnated with an electrolytic solution, such as e.g. a KCl solution. In a further exemplary embodiment, it can comprise a mixture of wood pulp and inert platelets, such as e.g. glass flakes, which is at least partly impregnated with an electrolytic solution, such as e.g. a KCl solution. Within the reference electrode layer 400, an Ag/AgCl wire 450 is arranged, which serves as reference electrode. The Ag/AgCl wire 450 is connected to the electrically conducting wire 804, which connects to the PCB 803. The Ag/AgCl wire 450 and/or the reference electrode may extend substantially parallel to the measuring electrode 600 and/or substantially parallel to the axis of symmetry of the container 800.

It has to be noted that embodiments of the invention are described with reference to different subject matters. In particular, some embodiments are described with reference to method type claims whereas other embodiments are described with reference to the device type claims. However, a person skilled in the art will gather from the description that, unless otherwise notified, in addition to any combination of features belonging to one type of subject matter also any combination between features relating to different subject matters is considered to be disclosed with this application. However, all features can be combined providing synergetic effects that are more than the simple aggregation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing the claimed invention, from a study of the drawings, the disclosure, and the dependent claims.

In the claims, the word "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

### List of Reference Signs

- 10, 100: reference electrode system
- 101: elongated tube
- 102: lower end of tube
- 103: upper end of tube
- 104: electrolyte
- 20, 200: membrane
- 30, 300: junction
- 40, 400: reference electrode layer
- 41: inert filler, for example inert platelets/glass flakes
- 42: lignocellulosic fibrous material ,wood pulp
- 43: path
- 45, 450: reference electrode
- 55: second conducting wire
- 60, 600: measuring electrode
- 601: pH glass
- 65, 650: first conducting wire
- 651: second wire
- 652: PT100 element
- 67, 670: pH-glass
- 70, 700: pH-sensor system
- 80, 800: container body
- 801: connector/adaptor section
- 802: ¾" thread
- 803: PCB
- 804, 804': wire
- 805: connector
- 806: O-ring
- 807: thread
- 808: O-ring
- 81, 810: first end
- 82, 820: second end
- 100: flow chart
- 101 to 105: steps of method

## Claims

1. A reference electrode system (10) for a pH-sensor system, the reference electrode system comprising:
a junction (30) comprising a polymerized ionic liquid,
a reference electrode layer (40) comprising an electrolytic solution, and
a reference electrode (45), which is at least partly arranged in the reference electrode layer (40).

2. The reference electrode system (10) of claim 1,
wherein the reference electrode layer (40) comprises a mixture of a lignocellulosic fibrous material and inert filler, which mixture is at least partly impregnated with the electrolytic solution.

3. The reference electrode system (10) of claim 2,
wherein the lignocellulosic fibrous material is wood pulp.

4. The reference electrode system (10) of claim 2,
wherein the inert platelets comprise glass flakes.

5. A reference electrode system (10) for a pH-sensor system, the reference electrode system comprising:
a junction (30),
a reference electrode layer (40) comprising a mixture of a lignocellulosic fibrous material and inert filler, which mixture is at least partly impregnated with an electrolytic solution, and
a reference electrode (45), which is at least partly arranged in the reference electrode layer (40).

6. The reference electrode system (10) of claim 5,
wherein the junction (30) comprises a polymerized ionic liquid.

7. The reference electrode system (10) of any of the preceding claims, further comprising:
a porous membrane (20) comprising polytetrafluoroethylene;
wherein the porous membrane (20) is arranged adjacent to the diaphragm (30); and/or
wherein the porous membrane is at least partly in contact with the diaphragm (30).

8. The reference electrode system (10) of any of claims 1 - 4 or 5-7,
wherein the polymerized ionic liquid comprises one or more of 3-ethyl-1-vinylimidazolium bis(trifluoromethansulfonyl)imide, 1,4 butandiyl-3,3'-[bis-(1 vinyl)-imidazolium] Di-bis(trifluoromethansulfonyl)imide, and 2-hydroxy-2-methylpropiophenone.

9. The reference electrode system (10) of any of of claims 1 - 4 or 5-7,
wherein the polymerized ionic liquid comprises 1-3 wt%, preferably 2 wt%, of 2-hydroxy-2-methylpropiophenone.

10. A pH-sensor system (70),
comprising a reference electrode system (10) according to any of claims 1 to 9 and a measuring electrode (60), which is arranged adjacent to and/or integrated in the reference electrode system (10).

11. The pH-sensor system (70) of claim 19, further comprising:
a container body (80);
wherein at least a part of the measuring electrode (60) and/or at least a part of the reference electrode system (10) is arranged within the container body.

12. A method for manufacturing a pH-sensor system (70), the method comprising the steps of:
- providing a container body (80), wherein a first end (81) of the container body (80) is open and/or comprises an opening;
- arranging a measuring electrode (60) at least partly in the container body (80) and connecting the measuring electrode (60) to a first electrically conducting wire (65);
- arranging a reference electrode (45) at least partly in the container body (80) and connecting the reference electrode (45) to a second electrically conducting wire (55);
- filling, through the first end (81), at least a part of the container body (80) with a reference electrode layer (40) comprising a mixture of wood pulp and inert platelets, which mixture is at least partly impregnated with an electrolytic solution; and
- arranging, at the first end (81) of the container (80), a diaphragm (30) comprising a polymerized ionic liquid.

13. The method of claim 12, further comprising the step of:
- arranging, at the first end (81) of the container (80), a porous membrane (20) comprising polytetrafluoroethylene.

14. The method of any of claims 12 or 13, further comprising the step of:
fixing an Ag/AgCl wire (45) as the reference electrode (45) at a second end (82) of the container (80).

15. Use of a mixture of wood pulp and inert platelets, particularly glass flakes, which mixture is at least partly impregnated with an electrolytic solution, in a reference electrode system (10) of a pH-sensor system (70).
